# EUROPÄISCHE PATENTANMELDUNG

(11) **EP 2 608 397 A1**
(43) Veröffentlichungstag der Anmeldung: **26.06.2013**
(21) Anmeldenummer: 11194177.9
(22) Anmeldetag: 19.12.2011
(51) Int. Cl.: H02M 7/797

(54) **Modularer Hochfrequenz-Umrichter für Antriebe**

(71) Anmelder: Siemens Aktiengesellschaft, 80333 München (DE)
(72) Erfinder: Weis, Benno, 91334 Hemhofen (DE)

(57) **Zusammenfassung**

Die Erfindung betrifft eine Stromrichterschaltung (4), die wenigstens zwei Submodule (22) in Reihenschaltung, die über eine Induktivität (20) elektrische Leistung aus einer eine Gleichspannung (16) abgebenden Leistungsquelle (8) bezieht, umfasst. Dabei weist jedes Submodul (22) eingangsseitig eine einphasige Halbbrücke (34) und lastseitig eine einphasige Vollbrücke (36) auf und die Halbbrücke (34) und die Vollbrücke (36) sind gleichspannungsseitig sowie parallel hierzu ein Zwischenkreiskondensator (38) geschaltet. Erfindungsgemäß ist zum Zwischenkreiskondensator (38) parallel geschaltet ein Zusatzkondensator (40) in jedem Submodul (22) vorhanden.

## Beschreibung

Die Erfindung betrifft eine Stromrichterschaltung gemäß dem Oberbegriff des Anspruchs 1 und einen Elektromotor mit der Stromrichterschaltung.

Eine Stromrichterschaltung zur elektrischen Energieversorgung der Motorwicklungen eines Elektromotors in einem Fahrzeugantrieb ist beispielsweise aus der Veröffentlichung Lukas Lamberts et al, "Modularer Hochfrequenz Umrichter für Fahrzeugantriebe", EMA 2010, 08. bis 09. September 2010, Aschaffenburg bekannt.

Dabei handelt es sich um eine Schaltung, die zum Umwandeln einer Gleichspannung aus einer elektrischen Leistungsquelle in mehrere Wechselspannungen vorgesehen ist. Die einzelnen Wechselspannungen werden durch in Reihe geschaltete Submodule erzeugt, an denen eingangsseitig jeweils ein Teil der Gleichspannung abfällt. Submodulintern wird der entsprechende Teil der Gleichspannung jeweils über eine als Wechselrichter arbeitende einphasige Vollbrücke in eine Wechselspannung umgewandelt, die an eine der Motorwicklungen abgegebenen werden kann. Die einphasige Vollbrücke umfasst zwei einphasige Halbbrücken, die jeweils zur Erzeugung einer Wechselspannungsphase vorgesehen sind, sodass die beiden Wechselspannungsphasen in der Summe eine einphasige Wechselspannung ergeben.

Die an den Eingängen der einzelnen Submodule abfallenden Teilspannungen werden vor der Wechselrichtung durch die Vollbrücke durch einen Hochsetzsteller erhöht. Der Hochsetzsteller umfasst eine Induktivität, die in Reihe zwischen der elektrischen Leistungsquelle und der Reihenschaltung der Vollbrücken verschaltet ist, sowie eine Eingangshalbbrücke in jedem Submodul. Die Vollbrücke und die Halbbrücke sind submodulintern gleichspannungsseitig verschaltet.

Parallel zur Vollbrücke und zur Eingangshalbbrücke in jedem Submodul ist ein Zwischenkreiskondensator verschaltet, der elektrische Energie, beispielsweise aus einem Blindleistungsfluss von den Motorwicklungen, zwischenspeichern kann.

Es ist Aufgabe der Erfindung, die bekannte Stromrichterschaltung zu verbessern.

Die Aufgabe wird durch die Merkmale der unabhängigen Ansprüche gelöst. Bevorzugte Weiterbildungen sind Gegenstand der abhängigen Ansprüche.

Die Erfindung schlägt vor, in jedem Submodul der eingangs genannten Stromrichterschaltung statt der Vollbrücke einen mehrphasigen Wechselrichter zu verschalten.

Der Vorschlag geht von der Überlegung aus, dass es Hintergedanke der Stromrichterschaltung der eingangs genannten Art ist, eine elektrische Leistung aus der elektrischen Leistungsquelle skalierbar an die elektrischen Lasten eines oder mehrerer an die Stromrichterschaltung angeschlossener elektrischer Verbraucher abzugeben. Durch diese Skalierbarkeit können beispielsweise defekte elektrische Lasten, wie Motorwicklungen, in einem elektrischen Verbraucher wie einem Elektromotor überbrückt werden, wobei der Elektromotor gegebenenfalls mit einer reduzierten Leistung weiterbetrieben werden kann.

Dem Vorschlag liegt jedoch die Erkenntnis zugrunde, dass es viele standardisierte elektrische Verbraucher gibt, die mit der Stromrichterschaltung der eingangs genannten Art wenn überhaupt, nur in einer ganz bestimmten Konfiguration betrieben werden können. So muss die Stromrichterschaltung für einen Standartmotor mit drei Motorwicklungen drei Submodule aufweisen. Für alle Stromrichterschaltung mit einer anderen Zellenzahl sind entsprechend Sondermotoren notwendig.

Um sicherzugehen, dass mit der Stromrichterschaltung der eingangs genannten Art auch Standardverbraucher, wie ein Standardmotor betrieben werden können schlägt die Erfindung vor, in jedem Submodul lastseitig statt der einphasigen Vollbrücke eine mehrphasige Wechselrichterschaltung, wie einen dreiphasigen Wechselrichter zu verschalten. Auf diese Weise ist die Möglichkeit, Standardlasten mit der Stromrichterschaltung der eingangs genannten Art jederzeit zu verwenden, gegeben.

Die Erfindung gibt daher eine Stromrichterschaltung an, die wenigstens zwei Submodule in Reihenschaltung, die über eine Induktivität elektrische Leistung aus einer eine Gleichspannung abgebenden Leistungsquelle bezieht, umfasst. Dabei weist jedes Submodul eingangsseitig eine einphasige Halbbrücke und lastseitig eine einphasige Vollbrücke auf, und die Halbbrücke und die Vollbrücke sind gleichspannungsseitig sowie parallel hierzu ein Zwischenkreiskondensator geschaltet. Erfindungsgemäß ist parallel zur Vollbrücke wenigstens eine Wechselrichterhalbbrücke geschaltet, die gemeinsam der Vollbrücke eine mehrphasige Wechselrichter-Brückenschaltung bildet.

Die Erfindung gibt auch einen Fahrzeugantrieb an, der ein erstes Rad, ein zweites Rad, einen ersten Elektromotor zum Antrieb des ersten Rades, einen zweiten Elektromotor zum Antrieb des zweiten Rades und eine angegebene Stromrichterschaltung umfasst, wobei das erste Submodul lastseitig mit dem ersten Elektromotor und das zweite Submodul lastseitig mit dem zweiten Elektromotor verbunden ist. Durch die angegebene Stromrichterschaltung können die einzelnen Räder unterschiedlich stark beschleunigt oder gebremst werden, was beispielsweise als Stellmöglichkeit bei einer Antischlupfregelung verwendet werden kann.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
- FIG 1: eine Schaltung mit einer beispielhaften Stromrichterschaltung, und
- FIG 2: ein beispielhaftes Submodul der Stromrichterschaltung zeigen.

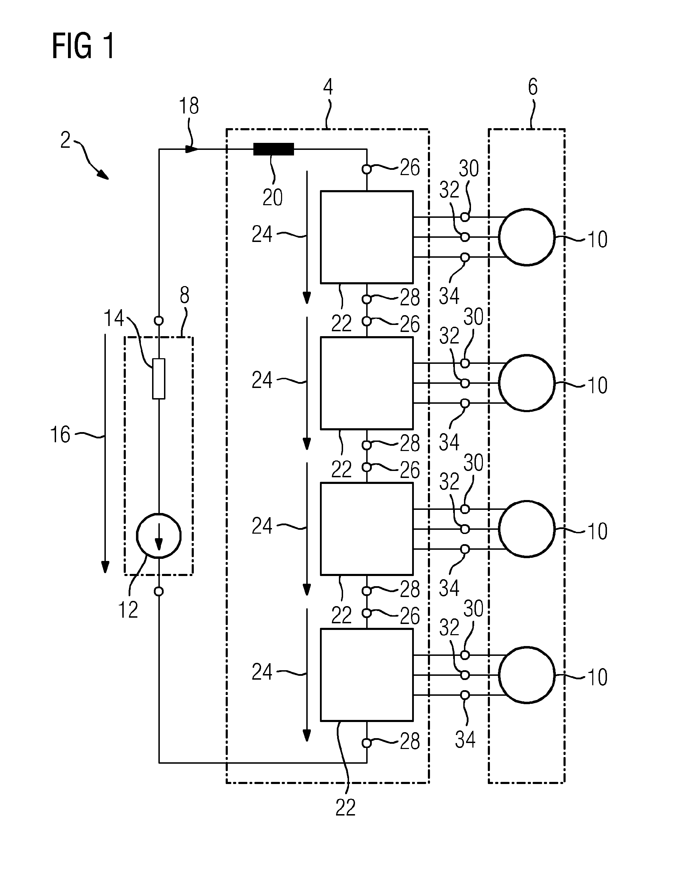

Es wird auf FIG 1 Bezug genommen, die eine Schaltung 2 mit einer beispielhaften Stromrichterschaltung 4 zeigt. Die Stromrichterschaltung 4 speist einen elektrischen Verbraucher 6 mit elektrischer Leistung aus einer elektrischen Leistungsquelle 8.

Der elektrische Verbraucher 6 ist in der vorliegenden Ausführung als Fahrzeug 6 ausgebildet und weist vier Elektromotoren 10 auf, wobei jeder Elektromotor 10 dreiphasig gespeist wird und jeweils eines der Räder des Fahrzeuges 6 antreibt.

Die elektrische Leistungsquelle 8 ist in der vorliegenden Ausführung als eine Fahrzeugbatterie 8, die sich in eine Spannungsquelle 12 mit einem dazu in Reihe angeschlossenen Innenwiderstand 14 zerlegen lässt. Die Batterie 8 legt an die Stromrichterschaltung 4 eine Batteriespannung 16 an und gibt an die Stromrichterschaltung 4 einen Batteriestrom 18 ab.

Die Stromrichterschaltung 4 weist eingangsseitig eine Induktivität 20 auf, die beispielsweise eine Spule sein kann. An diese Induktivität 20 schließt sich in Reihe eine Reihenschaltung aus vier noch zu beschreibenden Submodulen 22 an. An den einzelnen Submodulen 22 fällt jeweils eine Teilspannung 24 ab. Ferner ist an jedes Submodul 22 jeweils ein Elektromotor 10 angeschlossen. Basierend auf den Teilspannungen 24 versorgen die Submodule 22 auf diese Weise die Elektromotoren 10 mit elektrischer Energie in einer noch zu beschreibenden Weise. Für die Anzahl der Submodule 22 und Elektromotoren 10 wurde in der vorliegenden Ausführung sechs gewählt. Die Stromrichterschaltung 4 kann jedoch eine beliebig hohe Anzahl an Submodulen 22 besitzen und damit eine beliebig hohe Anzahl an elektrischen Lasten speisen, die hier beispielhaft als Elektromotoren 10 ausgeführt sind. Je mehr Submodule 22 jedoch in der Reihenschaltung verschaltet sind, desto kleiner werden die entsprechenden Teilspannungen 24.

Jedes Submodul 22 weist eine erste Eingangsklemme 26, eine zweite Eingangsklemme 28, eine erste Ausgangsklemme 30, eine zweite Ausgangsklemme 32 und eine dritte Ausgangsklemme 34 auf. Während über den ersten und zweiten Eingangsklemmen 26, 28 jeweils die Teilspannungen 24 abfallen, sind an die ersten und zweiten Ausgangsklemmen 30, 32 die Lasten 10 angeschlossen.

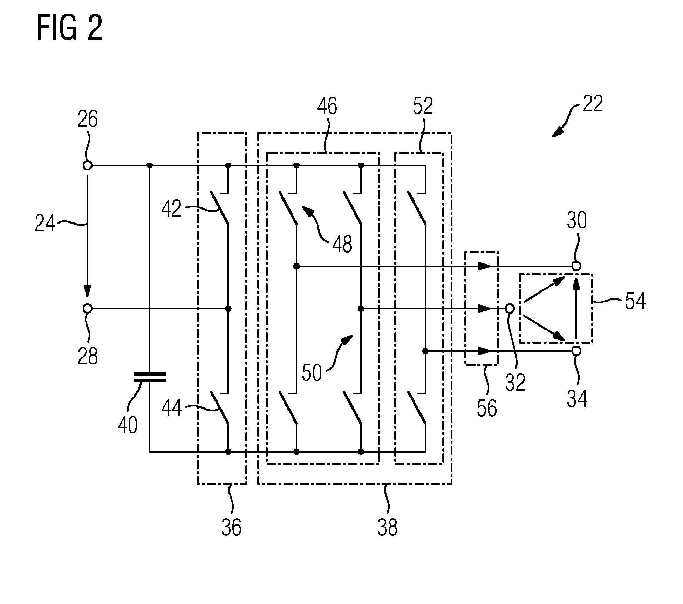

Es wird auf FIG 2 Bezug genommen, die beispielhaft den Aufbau eines der Submodule 22 in der Stromrichterschaltung 4 der FIG 1 zeigt. In FIG 2 werden zu FIG 1 gleiche Elemente mit gleichen Bezugszeichen versehen und nicht noch einmal beschrieben.

Das Submodul 22 weist eine Eingangshalbbrücke 36, eine Sechspulsbrückenschaltung 38 und einen Zwischenkreiskondensator 40 auf, die miteinander parallel verschaltet sind.

Die Eingangshalbbrücke 36 weist einen ersten Schalter 42 und einen dazu in Reihe geschalteten zweiten Schalter 44, zwischen denen die zweite Eingangsklemme 28 angeschlossen ist. Die Schalter können als Leistungshalbleiterschalter, wie beispielsweise MOSFETs (Metalloxid-Feldeffekttransistor) ausgebildet sein.

Die erste Teilspannung 24 ist an den ersten Schalter 42 angelegt, während der zweite Schalter 44 in Reihe zwischen dem ersten Schalter 42 und dem dreiphasigen Wechselrichter 38 geschaltet ist. Somit kann der erste Schalter 42 aus Sicht der Sechspulsbrückenschaltung 38 den Eingang 26, 28 aus der Fahrzeugbatterie 8 kurzschließen, während der zweite Schalter 44 (bei geöffnetem ersten Schalter 42) die Sechspulsbrückenschaltung 38 in den Strompfad der Fahrzeugbatterie 8 legen kann. Werden in jedem Submodul 22 die Schalter 42, 44 in gleicher Weise abwechselnd geöffnet und geschlossen, ist gemeinsam mit der Induktivität 20 ein Hochsetzsteller geschaffen, der die Summe der Teilspannungen 24 höher setzt, als die Spannung 16 der Fahrzeugbatterie 8. Weiterhin kann durch die Eingangshalbbrücke 36 die Sechspulsbrückenschaltung 38 auch dauerhaft aus der Reihenschaltung der vier Submodule 22 entfernt werden, wenn der erste Schalter 42 dauerhaft geschlossen bleibt. Fällt bei dem Fahrzeug mit der Stromrichterschaltung 4 beispielsweise der das vordere linke Rad antreibende Elektromotor 10 aus, so können durch die Stromrichterschaltung 4 beispielsweise die Elektromotoren 10 beider Vorderräder aus dem Leistungskreis der Stromrichterschaltung 4 herausgenommen werden, so dass das Fahrzeug in einem Notprogramm beispielsweise nur noch mit einem Heckantrieb weiterfahren kann.

Die Sechspulsbrückenschaltung 38 weist eine Vollbrücke 46 aus einer parallelgeschalteten ersten Wechselrichterhalbbrücke 48 und einer zweiten Wechselrichterhalbbrücke 50 sowie eine parallel dazu geschaltete dritte Wechselrichterhalbbrücke 52 auf. Die Wechselrichterhalbbrücken 48, 50, 52 sind analog zur Eingangshalbbrücke 34 aufgebaut. Abhängig von der Art des Leistungshalbleiterschalters können zusätzlich antiparallel zu den Schaltern den Wechselrichterhalbbrücken nicht weiter dargestellte Freilaufdioden geschaltet sein, die ein Rückspeisen einer elektrischen Leistung vom angeschlossenen Elektromotor 10 in das Submodul 22 erlauben. Auf eine extra Referenzierung wird in FIG 2 der Übersichtlichkeit halber verzichtet. Die Teilspannung 24, die über den Zwischenkreiskondensator 40 stabilisiert wird, kann durch eine geeignete Ansteuerung der Sechspulsbrückenschaltung 38 in eine dreiphasige Wechselspannung 54 umgewandelt werden. Die dreiphasige Wechselspannung 54 wird an den entsprechenden Elektromotor 10 angelegt und ruft einen dreiphasigen Wechselstrom 56 durch den Elektromotor 10 hervor. Gibt der Elektromotor 10 elektrische Energie an die Sechspulsbrückenschaltung 38 ab, so kann diese den entsprechenden Leistungsfluss beispielsweise mit den bereits erwähnten Freilaufdioden zurück in das Submodul 22 leiten.

Obwohl die Erfindung im Detail durch die bevorzugten Ausführungsbeispiele näher illustriert und beschrieben wurde, ist die Erfindung nicht durch diese Ausführungsbeispiele eingeschränkt. Andere Variationen können vom Fachmann hieraus abgeleitet werden, ohne den Schutzumfang der Erfindung zu verlassen.

## Patentansprüche

1. Stromrichterschaltung (4), umfassend wenigstens zwei Submodule (22) in Reihenschaltung, die über eine Induktivität (20) elektrische Leistung aus einer eine Gleichspannung (16) abgebenden Leistungsquelle (8) bezieht,
- wobei jedes Submodul (22) eingangsseitig eine einphasige Halbbrücke (36) und lastseitig eine einphasige Vollbrücke (46) aufweist, und
- wobei die Halbbrücke (36) und die Vollbrücke (46) gleichspannungsseitig sowie parallel hierzu ein Zwischenkreiskondensator (40) geschaltet sind,
**gekennzeichnet durch**
- wenigstens eine parallel zur Vollbrücke (46) geschaltete Wechselrichterhalbbrücke (52), die gemeinsam der Vollbrücke (46) eine mehrphasige Wechselrichter-Brückenschaltung (38) bildet.

2. Fahrzeugantrieb (2) umfassend wenigstens ein erstes Rad, ein zweites Rad, einen ersten Elektromotor (10) zum Antrieb wenigstens des ersten Rades, einen zweiten Elektromotor (10) zum Antrieb wenigstens des zweiten Rades und eine Stromrichterschaltung (4) nach Anspruch 1, wobei das erste Submodul (22) lastseitig mit dem ersten Elektromotor (10) und das zweite Submodul (22) lastseitig mit dem zweiten Elektromotor (10) verbunden ist.
